**Europäisches Patentamt**

**European Patent Office**

**Office européen des brevets**

(11) Veröffentlichungsnummer: **0 430 202 A2**

# EUROPÄISCHE PATENTANMELDUNG

(21) Anmeldenummer: **90122733.0**

(22) Anmeldetag: **28.11.90**

(51) Int. Cl.⁵: **H04N 7/00**

(30) Priorität: **01.12.89 DE 3939829**

(43) Veröffentlichungstag der Anmeldung:
**05.06.91 Patentblatt 91/23**

(84) Benannte Vertragsstaaten:
**AT CH DE FR GB IT LI Patentblatt 00/1**

Kurgartenstrasse 37
W-8510 Fürth/Bay.(DE)

(72) Erfinder: **Wendland, Broder, Prof. Dr., Grundig E.M.V.**
**Max Grundig, holländ. Stiftung & Co. KG**
**Kurgartenstrasse 37, W-8510 Fürth(DE)**
Erfinder: **Silverberg, Michael, Dr., Grundig E.M.V.**
**Max Grundig, holländ. Stiftung & Co. KG**
**Kurgartenstrasse 37, W-8510 Fürth(DE)**

(71) Anmelder: **GRUNDIG E.M.V.**
**Elektro-Mechanische Versuchsanstalt Max Grundig holländ. Stiftung & Co. KG.**

(54) **Sender zur Erzeugung von Videosignalen unterschiedlicher Bildbreiten- zu Bildhöhen-Verhältnisse und Empfänger zur Darstellung von Videosignalen.**

(57) Die Erfindung betrifft einen Sender zur Erzeugung von Videosignalen unterschiedlicher Bildbreiten-zu Bildhöhen-Verhältnisse sowie Empfänger zur Darstellung von Videosignalen. Die Übertragung der Signale geschieht nach dem sogenannten Letterbox-Verfahren, wobei im mittleren Teil des Bildes vertikal-niederfrequente Signale und in am oberen und unteren Bildrand liegenden Zeilen vertikal-höherfrequente Signale übertragen werden.

FIGUR 1

EP 0 430 202 A2

Die Erfindung betrifft einen Sender zur Erzeugung von sowohl auf einem herkömmlichen Fernsehempfänger als auch auf einem Fernsehempfänger mit vergrößertem Bildbreitenzu Bildhöhen-Verhältnis darstellbaren Videosignalen. Weiterhin betrifft die Erfindung einen Empfänger zur Darstellung von Videosignalen.

Bei der Diskussion um zukünftige Fernsehsysteme muß unterschieden werden zwischen sog. HDTV-Systemen, welche mit einer höheren Zeilenzahl arbeiten als die heutigen Fernsehsysteme PAL, NTSC und SECAM und mit diesen nicht kompatibel sind, und verbesserten Fernsehsystemen, welche mit den heutigen Fernsehsystemen kompatibel sind. Verbesserte kompatible Fernsehsysteme haben den Vorteil, daß die heute auf dem Markt befindlichen Empfänger auch weiterhin verwendbar sind.

In der Zeitschrift "SMPTE-Journal", Januar 1989, S. 14-19, werden zwei Wege zur Realisierung eines verbesserten kompatiblen (NTSC-) Fernsehsystems aufgezeigt. Der erste Weg besteht im wesentlichen darin, Chrominanzinformation nur in jedem zweiten Vollbild zu übertragen und die dazwischenliegenden Vollbilder zur Übertragung von hochauflösender Luminanzinformation zu nutzen. Der zweite Weg besteht im wesentlichen darin, zur Bildverbesserung geeignete Zusatzinformationen in dunkelgetasteten Bereichen am oberen und unteren Bildrand zu übertragen. Ein verbesserter Empfänger besitzt Schaltungen, die diese Zusatzinformationen zum Erhalt eines besseren Bildes auswerten. Mittels eines herkömmlichen Empfängers kann ein Bild dargestellt werden, welches am oberen und unteren Rand schwarze Balken aufweist.

Aus der Zeitschrift "Fernseh- und Kino-Technik", 42. Jg., Nr. 10/1988, S. 483-502, ist es bereits im Zusammenhang mit der Übertragung von Fernsehsignalen bekannt, eine Diagonalfilterung und eine Offsetmodulation durchzuführen, um eine erhöhte örtliche Auflösung übertragen zu können.

Aus der DE-PS 38 43 423 ist bereits ein kompatibles Fernsehübertragungssystem bekannt, bei welchem senderseitig die aktiven Teile von abgesonderten Zeilen am oberen und unteren Bildrand unsichtbar etwa im Pegelbereich zwischen Schwarzpegel und Synchronimpulspegel mit reduziertem Modulationsgrad analog codiert übertragen werden.

Ferner ist aus der Zeitschrift "Funkschau", 1989, Heft 8, S. 56, ein Verfahren zur Realisierung eines PAL-Übertragungssystems bekannt, bei dessen Verwendung auf einem Breitbildempfänger ein Bild mit einem Bildbreiten- zu Bildhöhen-Verhältnis von 5.33 : 3 (bzw. 16 : 9) darstellbar ist, während auf einem herkömmlichen 4:3-Empfänger ein Bild mit am oberen und unteren Bildrand auftretenden dunklen Streirn angezeigt werden kann. Dazu wird im Studio mit einer Breitbild-PAL-Kamera eine Szene aufgenommen und nach anschließender digitaler Signalbearbeitung von den 575 aktiven Zeilen eines 625-Zeilen-PAL-Bildes räumlich jede vierte Zeile herausgenommen. In den am oberen und unteren Bildrand auftretenden dunklen Streifen können dann weitere Bildinformationen übertragen werden, die in Verbindung mit einem Breitbildempfänger zu einem Bild mit verbesserter Auflösung führen. Es hat sich gezeigt, daß bei einem derartigen Vorgehen bei der Darstellung der Bilder auf einem herkömmlichen Empfänger heftige Alis-Störungen auftreten.

Ausgehend von diesem Stand der Technik liegt der Erfindung die Aufgabe zugrunde, einen Weg aufzuzeigen, wie senderseitig Videosignale erzeugt werden können, welche innerhalb eines standardisierten Übertragungskanals übertragen werden können und welche sowohl auf einem verbesserten Empfänger mit einem ersten Bildbreiten- zu Bildhöhen-Verhältnis als auch auf einem herkömmlichen Empfänger mit einem zweiten Bildbreitenzu Bildhöhen-Verhältnis, welches kleiner ist als das erste Bildbreiten- zu Bildhöhen-Verhältnis, dargestellt werden können, wobei bei der Darstellung auf dem herkömmlichen Empfänger keine Alias-Störungen sichtbar sind. Weiterhin besteht die Aufgabe der Erfindung darin, einen verbesserten Empfänger zur Darstellung von Videosignalen anzugeben.

Diese Aufgabe wird durch einen Sender mit den im Anspruch 1 angegebenen Merkmalen gelöst. Eine vorteilhafte Ausgestaltung eines derartigen Senders ist im Anspruch 2 angegeben. Gegenstand des Anspruchs 3 ist ein verbesserter Empfänger. Eine vorteilhafte Ausgestaltung eines derartigen Empfängers ist im Anspruch 4 angegeben. Die Ansprüche 5 und 6 betreffen vorteilhafte Ausgestaltungen des im Anspruch 3 oder 4 beschriebenen Empfängers.

Die Vorteile der Erfindung bestehen insbesondere darin, daß das von einem Sender gemäß Anspruch 1 erzeugte Videosignal über einen standardisierten Übertragungskanal mit einer Bandbreite von beispielsweise 5 MHz übertragen und auf einem herkömmlichen Fernsehempfänger mit einem Bildbreiten- zu Bildhöhen-Verhältnis von 4 : 3 dargestellt werden kann, ohne daß im wiedergegebenen Bild Alias-Störungen sichtbar sind. Weitere Vorteile der Erfindung ergeben sich aus der Erläuterung von Ausführungsbeispielen anhand der Figuren.

Es zeigt

- Figur 1 ein Ausführungsbeispiel für einen Sender nach der Erfindung
- Figur 2 ein Ausführungsbeispiel für einen verbesserten Empfänger

- Figur 3 ein Signalspektrum zur Erläuterung der Wirkungsweise des Diagonalfilters 2 von Figur 1,
- Figur 4 ein Signalspektrum zur Erläuterung der Wirkungsweise des Offset-Modulators 3 von Figur 1, und
- Figur 5 Signalspektren zur Erläuterung der Wirkungsweise der Schaltung 4 von Figur 1.

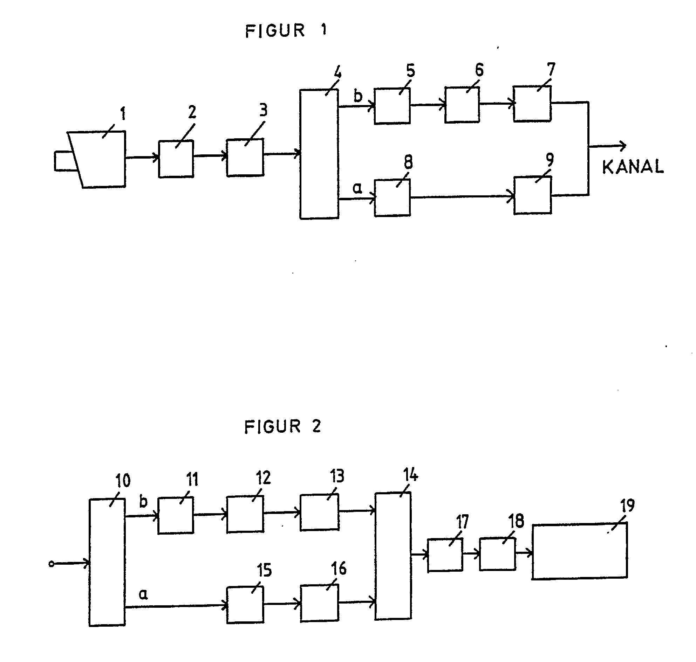

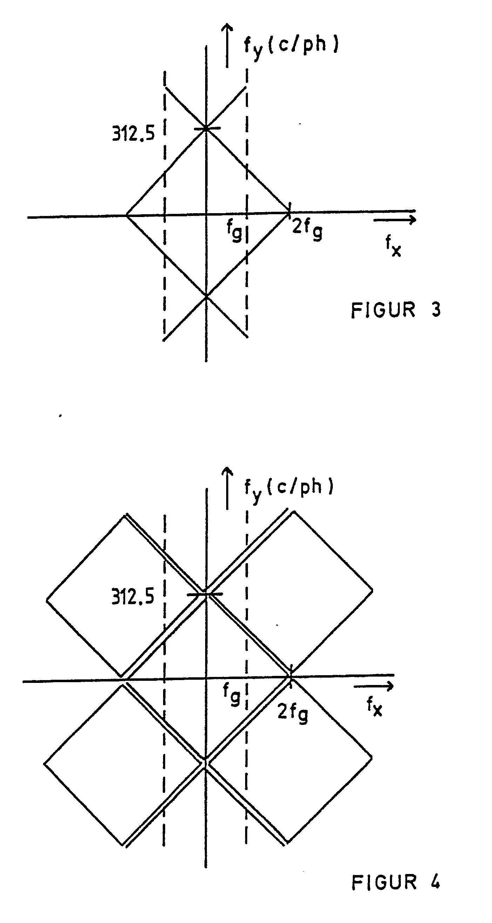

Die Figur 1 zeigt ein Ausführungsbeispiel für einen Sender nach der Erfindung. Mittels einer Fernsehkamera 1 wird ein Videosignal (Luminanzsignal) mit einer Vollbildfrequenz von 25 Hz, 625 Zeilen pro Vollbild und einem Bildbreiten- zu Bildhöhen-Verhältnis von 16 : 9 erzeugt. Dieses Signal wird einem in Richtung horizontaler und vertikaler (Orts-)Frequenzen wirkenden Diagonalfilter 2 zugeführt. Das Signalspektrum des Ausgangssignals des Diagonalfilters 2 ist in Figur 3 gezeigt. Es ist ersichtlich, daß das Ausgangssignal des Diagonalfilters 2 eine Vertikalauflösung von 312.5 Schwingungen pro Bildhöhe sowie in Horizontalrichtung eine Grenzfrequenz hat, die der doppelten Bandbreite eines standardisierten 5 MHz-Übertragungskanals entspricht, d.h. 10 MHz. Die gestrichelten Linien markieren die Bandgrenzen des Übertragungskanals zwischen Sender und Empfänger.

Das Ausgangssignal des Diagonalfilters 2 wird in einem Offset-Modulator 3 offset-moduliert. Durch diese Offset-Modulation wird das Basisspektrum des Signals in diagonaler Richtung fortgesetzt, wie es in Figur 4 gezeigt ist. Dadurch liegen horizontal-höherfrequente Signalanteile, die im Spektrum nach Figur 3 außerhalb der Bandgrenzen des Übertragungskanals liegen, nunmehr innerhalb der Bandgrenzen des Übertragungskanals.

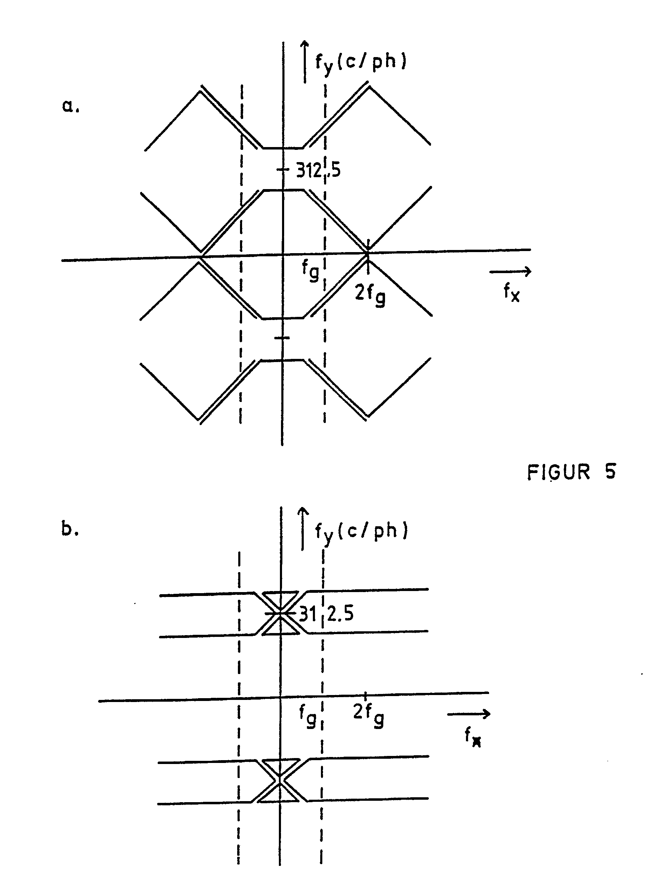

Das Ausgangssignal des Offset-Modulators 3 wird einer Schaltung 4 zugeführt, in der die vertikal-niederfrequenten Signalanteile von den vertikal-höherfrequenten Signalanteilen getrennt werden. Das Spektrum der am Ausgang a der Schaltung 4 erhaltenen vertikal-niederfrequenten Signalanteile ist in Figur 5a gezeigt. Das Spektrum der am Ausgang b der Schaltung 4 erhaltenen vertikal-höherfrequenten Signalanteile ist aus Figur 5b ersichtlich.

Die am Ausgang a der Schaltung 4 zur Verfügung stehenden vertikal-niederfrequenten Signalanteile werden einem ersten Zeilenzahlkonverter 8 zugeführt. Dieser Zeilenzahlkonverter 8, der als Transversalfilter realisiert sein kann, hat die Aufgabe, die vertikal-niederfrequenten Signalanteile der 575 aktiven Zeilen eines Vollbildes mittels Interpolation auf 431 Zeilen zu reduzieren.

Die am Ausgang b der Schaltung 4 zur Verfügung stehenden vertikal-höherfrequenten Signalanteile werden einem zweiten Zeilenzahlkonverter 5 zugeführt. Dieser Zeilenzahlkonverter 5, der ebenfalls als Transversalfilter realisiert sein kann, hat die Aufgabe, die vertikal-höherfrequenten Signalanteile der 575 aktiven Zeilen eines Vollbildes mittels Interpolation auf 144 Zeilen zu reduzieren. Das Ausgangssignal des zweiten Zeilenzahlkonverters 5 wird einer Schaltung 6 zur Reduzierung der Amplitude der vertikal-höherfrequenten Signalanteile zugeführt. Die Amplitude der vertikal-höherfrequenten Signalanteile wird derart reduziert, daß die vertikal-höherfrequenten Signalanteile mit im ultraschwarzbereich liegenden Signalpegeln übertragen werden.

Die Ausgangssignale des ersten Zeilenzahlkonverters 8 und der Amplitudenreduktionsschaltung 6 werden Speichern 7 und 9 zugeführt. Die Auslesevorgänge aus den Speichern 7 und 9 werden derart gesteuert, daß in jeweils 72 Zeilen am oberen und unteren Bildrand die in der Amplitude abgesenkten vertikal-höherfrequenten Signalanteile und in die 431 in der Bildmitte gelegenen Zeilen die vertikal-niederfrequenten Signalanteile eingefügt werden. Das so erhaltene Gesamtsignal wird an den Übertragungskanal geleitet.

Die Figur 2 zeigt ein Ausführungsbeispiel für einen verbesserten Empfänger zur Darstellung von in einem Sender gemäß Figur 1 erzeugten Videosignalen.

Das über den Übertragungskanal übertragene Videosignal wird einer Schaltung 10 zugeführt, in der die vertikal-niederfrequenten Signalanteile von den vertikal-höherfrequenten Signalanteilen getrennt werden. Diese Signaltrennung kann sowohl unter Verwendung eines Zeitkriterums mit dem Vertikalsynchronimpuls als Referenz als auch unter Verwendung von vertikalen Tief-bzw. Hochpaßfiltern erfolgen. Die am Ausgang a der Schaltung 10 zur Verfügung stehenden vertikal-niederfrequenten Signalanteile werden einem dritten Zeilenzahlkonverter 15 zugeführt. Dieser Zeilenzahlkonverter 15 hat die Aufgabe, die Zeilenzahl der vertikal-niederfrequente Signalanteile enthaltenden Zeilen von 431 auf 575 zu erhöhen. Dies erfolgt mittels Interpolation.

Die am Ausgang b der Schaltung 10 zur Verfügung stehenden vertikal-höherfrequenten Signalanteile werden einer Schaltung 11 zugeführt, in der die im Sender reduzierten Amplituden der vertikal-höherfrequenten Signalanteile wieder auf ihren ursprünglichen Wert erhöht werden. Das so erhaltene Signal gelangt an einen vierten Zeilenzahlkonverter 12. Dieser hat die Aufgabe, die Zeilenzahl der vertikal-höherfrequenten Signalanteile von 144 auf 575 zu erhöhen. Dies erfolgt ebenfalls mittels Interpolation.

Die Ausgangssignale der Zeilenzahlkonverter 12 und 15 werden Speichern 13 bzw. 16 zugeführt, in denen die vertikal-niederfrequenten und die vertikal-höherfrequenten Signalanteile in die richtige zeitliche Beziehung gebracht werden. Die Ausgangssignale der Speicher 13 und 16 werden in einem Summierer 14 aufsummiert. Das so erhaltene Signal wird in einem Offset-Demodulator 17 offset-demoduliert und in einem in Richtung horizontaler und vertikaler Frequenzen wirkenden Diagonalfilter 18 diagonal nachgefiltert. Das Ausgangssignal des Diagonalfilters 18 wird auf einem Bildschirm 19 mit einem Bildbreiten- zu Bildhöhen-Verhältnis von 16 : 9 dargestellt. Beim Bildschirm 19 kann es sich um einen 625-Zeilen-Bildschirm handeln, auf dem das Signal zeilensprungfrei dargestellt wird, oder um einen 1250-Zeilen-Bildschirm, auf dem das Signal mit Zeilensprung dargestellt wird. Im letztgenannten Fall können die 625 Zeilen, die zum Erhalt eines 1250-zeiligen Signals fehlen, durch eine (zusätzliche) Aufwärtsinterpolation im Diagonalfilter 18 erzeugt werden.

Weiterhin kann das in einem Sender gemäß Figur 1 erzeugte Videosignal mittels eines herkömmlichen Empfängers mit einem Bildbreiten- zu Bildhöhen-Verhältnis von 4 : 3 dargestellt werden. Bei dieser Darstellung verbleiben am oberen und unteren Bildrand jeweils schwarze Ränder. Die in diesen Randbereichen für den verbesserten Empfänger mit reduzierter Amplitude übertragenen vertikal-höherfrequenten Signalanteile wirken sich wegen der genannten Amplitudenreduktion für den Standardempfänger nicht störend aus. Die eigentliche Bildinformation für den Standardempfänger ist in den in der Bildmitte übertragenen 431 Zeilen enthalten. Die Darstellung dieser Bildinformation auf dem Bildschirm des Standardempfängers erfolgt im Unterschied zu dem aus der eingangs genannten Zeitschrift "Funkschau" bekannten Stand der Technik aliasfrei.

## Ansprüche

1. Sender zur Erzeugung von sowohl auf einem herkömmlichen Fernsehempfänger als auch auf einem Fernsehempfänger mit vergrößertem Bildbreiten- zu Bildhöhen-Verhältnis darstellbaren Videosignalen, welcher die Kombination folgender Merkmale aufweist:
   - einen Videosignalgenerator (1), welcher an seinem Ausgang ein Videosignal mit dem vergrößertem Bildbreiten- zu Bildhöhen-Verhältnis zur Verfügung stellt,
   - eine Schaltung (4) zur Aufspaltung des Videosignals in vertikal-höherfrequente und vertikal-niederfrequente Ortsfrequenz-Signalanteile,
   - einen ersten Zeilenzahlkonverter (8) zur Herabsetzung der Zeilenzahl der vertikal-niederfrequenten Ortsfrequenz-Signalanteile,

   - einen zweiten Zeilenzahlkonverter (5) zur Herabsetzung der Zeilenzahl der vertikal-höherfrequenten Ortsfrequenz-Signalanteile,
   - eine Schaltung (6) zur Amplitudenreduzierung der vertikal-höherfrequenten Ortsfrequenz-Signalanteile, derart, daß die Signalpegel der vertikal-höherfrequenten Ortsfrequenz-Signalanteile im Ultraschwarzbereich liegen, und
   - eine Schaltung (7, 9) zum Einsetzen der amplitudenreduzierten vertikal-höherfrequenten Ortsfrequenz-Signalanteile in am oberen und unten Bildrand liegende Zeilen des Videosignals und der vertikal-niederfrequenten Ortsfrequenz-Signalanteile in den mittleren Teil des Bildes.

2. Sender nach Anspruch 1, welcher weiterhin aufweist:
   - ein in Richtung horizontaler und vertikaler Frequenzen wirkendes Diagonalfilter (2), und
   - einen Offset-Modulator (3) zur Offset-Modulation des Ausgangssignals des Diagonalfilters (2).

3. Empfänger zur Darstellung von Videosignalen, welcher aufweist:
   - eine Schaltung (10) zur Aufspaltung des übertragenen Signals in vertikal-höherfrequente und vertikal-niederfrequente Signalanteile,
   - einen dritten Zeilenzahlkonverter (15) zur Erhöhung der Zeilenzahl der vertikal-niederfrequenten Signalanteile,
   - eine Schaltung (11) zur Amplitudenerhöhung der vertikal-höherfrequenten Signalanteile,
   - einen vierten Zeilenzahlkonverter (12) zur Erhöhung der Zeilenzahl der vertikal-höherfrequenten Signalanteile,
   - eine Schaltung (13, 16) zum Laufzeitausgleich zwischen vertikal-niederfrequenten und vertikal-höherfrequenten Signalanteilen,
   - einen Summierer (14) zur Summation von vertikal-höherfrequenten und vertikal-niederfrequenten Signalanteilen und
   - einen Bildschirm (19) mit vergrößertem Bildbreiten- zu Bildhöhen-Verhältnis zur Darstellung des Videosignals.

4. Empfänger nach Anspruch 3, welcher weiterhin aufweist:
   - einen Offset-Demodulator (17) zur Offset-Demodulation des Ausgangssignals des Summierers (14), und

- ein in Richtung horizontaler und vertikaler Frequenzen wirkendes Diagonalfilter (18).

5. Empfänger nach Anspruch 3 oder 4, **dadurch gekennzeichnet,** daß die Darstellung zeilensprungfrei erfolgt.

6. Empfänger nach Anspruch 3 oder 4, **dadurch gekennzeichnet,** daß er eine Schaltung (18) zur Verdopplung der Zeilenzahl aufweist, und daß die Darstellung mit der doppelten Zeilenzahl mit Zeilensprung erfolgt.

FIGUR 1

KANAL

FIGUR 2

FIGUR 3

FIGUR 4

a.

$f_y(c/ph)$

312,5

$f_g$

$2f_g$

$f_x$

FIGUR 5

b.

$f_y(c/ph)$

312.5

$f_g$

$2f_g$

$f_x$